Europäisches Patentamt

(19) European Patent Office    (11) Publication number: **0 103 920**

Office européen des brevets    **B1**

(12)    **EUROPEAN PATENT SPECIFICATION**

(45) Date of publication of patent specification: **13.08.86**    (51) Int. Cl.⁴: **A 01 F 15/00**

(21) Application number: **83201194.4**

(22) Date of filing: **16.08.83**

(54) Apron supporting member in roll baling machine.

(30) Priority: **03.09.82 US 414753**

(43) Date of publication of application:
**28.03.84 Bulletin 84/13**

(45) Publication of the grant of the patent:
**13.08.86 Bulletin 86/33**

(84) Designated Contracting States:
**DE FR GB**

(56) References cited:
**US-A-4 062 172**
**US-A-4 229 934**

(73) Proprietor: **SPERRY CORPORATION**
**1290, Avenue of the Americas**
**New York, N.Y. 10019 (US)**

(72) Inventor: **Schlotterbeck, Stephen C.**
**Route 2**
**New Holland, PA 17557 (US)**
Inventor: **Uhland, Francis L., Jr.**
**Route 2**
**Narvon, PA 17555 (US)**
Inventor: **Campbell, Willis R.**
**Route 4**
**Ephrata, PA 17522 (US)**
Inventor: **Freimuth, J. H.**
**Route 3**
**New Holland, PA 17557 (US)**

(74) Representative: **Vandenbroucke, Alberic T.J.**
**SPERRY NEW HOLLAND DIVISION OF SPERRY**
**N.V. Leon Claeysstraat, 3A**
**B-8210 Zedelgem (BE)**

EP 0 103 920 B1

Courier Press, Leamington Spa, England.

## Description

This invention relates generally to roll baling machines typically referred to as 'round balers' which form cylindrical roll bales of crop material.

In a type of roll baling machine having a floor roller and a bale forming apron which consists of endless chains and transverse tubes, there is a tendency for the apron chains and tubes to become damaged during bale formation because of the heavy bending and twisting loads exerted on the apron tubes in the area where the apron is very close to the floor roller. Such damage may be in the form of permanently bent apron tubes and broken apron chains. One attempt to overcome this problem has been to merely strengthen the apron tubes. This has proven unsuccessful, however, since the tubes still become permanently deformed.

In another attempt to overcome this problem, a smooth idler or supporting roller has been used to support the apron tubes in the area where they are most subjected to bending and twisting loads, i.e. where the apron tubes successively enter into engagement with a bale being formed in the machine. However, this attempt also failed to provide an overall solution to the extent that said smooth supporting roller does not prevent bending or twisting damage to the apron since it only takes up forces which are directed generally radially with respect thereto while that, at said location in the machine, the twisting and bending forces may extend in different directions. Similar supporting rollers are shown in US. 4.062.172 albeit that these rollers are provided at different locations than in the prior art arrangement just described.

It is therefore the object of the present invention to provide a roll baling machine comprising an apron including transversely spaced apart endless flexible members and a plurality of transverse members extending at intervals between and interconnecting the endless flexible members and which overcomes the afore described problem.

According to the invention, a roll baling machine is provided comprising:

— an apron movable to form roll bales of crop material and including transversely spaced apart endless flexible members and a plurality of transverse members extending at intervals between and interconnecting the endless flexible members, and

— a supporting member rotatable in synchronism with the apron for, during operation, providing support for the transverse members intermediate the endless flexible members in a generally radial direction of the supporting member; the supporting member being sprocket-shaped with notches for receiving, during operation, adjacent transverse members providing thereby support for said transverse members in a direction at an angle relative to said radial direction.

Preferably the notches and the transverse members are proportionally dimensioned and shaped for the sprocket-shaped supporting member to provide support for the transverse apron members received in the notches thereof in directions between a radially inward direction and a generally tangential direction with respect to the supporting member. More generally, the notches and the transverse members preferably are proportionally dimensioned and shaped for the sprocket-shaped member to provide support for the transverse apron members received in the notches thereof in directions between opposed tangential directions with respect to the supporting member.

The sprocket-shaped member according to the invention is advantageously provided generally at the location where, during operation, the transverse apron members successively enter into engagement with the bale being formed in the machine. This may be generally vertically beneath the bale forming chamber. In case the roll baling machine further also comprises a floor roller for supporting a portion of the weight of the bale being formed in the machine, said sprocket-shaped supporting member advantageously is provided in the area where the apron is closest to the floor roller.

The sprocket-shaped supporting member according to the invention may be provided co-axially with drive members driving the apron in a given direction as well as co-axially with guide members guiding the apron along a predetermined path during the bale formation.

In its preferred embodiment, the sprocket-shaped member is formed at least partially of a rubber material.

A roll baling machine embodying the present invention will now be described in more details by way of example and with reference to the accompanying drawings wherein:

Fig. 1 is a side elevation view of a typical roll baling machine embodying the present invention;

Fig. 2 is an enlarged sectional view taken along lines 2—2 of Fig. 1;

Fig. 3a and 3b are sectional views taken along lines 3—3 of Fig. 2 showing the sprocket-shaped member of the present invention; and

Fig. 4 is a sectional view similar to Figs. 3a and 3b showing a prior art idler.

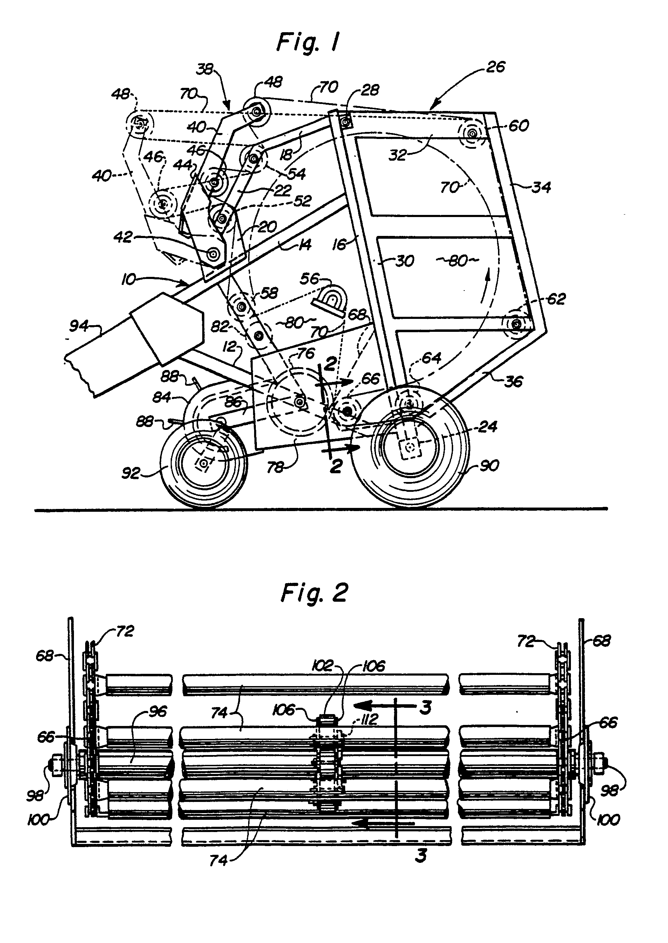

Referring to Fig. 1, a typical roll baling machine embodying the preferred embodiment of the present invention includes a base frame 10 having opposite sides each formed generally of frame members 12, 14, 16 rigidly connected in a triangular configuration with side plates substantially covering the space therebetween. Each side of the base frame 10 includes an upper section, which consists of a frame member 18 rigidly connected to the frame member 16, a bracket 20 rigidly connected to frame member 14, and a frame member 22 rigidly connected between frame member 18 and the bracket 20. A plate is connected to and covers the space between the frame members 14, 16, 18 and 22. A frame member 24 extends transversely of the machine and is rigidly connected to the frame members 16. A rear frame 26 is pivotally connected at 28 to the base frame 10 by suitable bearings. The rear frame 26 has opposite sides each formed generally of frame members 30, 32, 34, 36 rigidly connected in a substantially trapezoidal configuration with side plates substantially covering the space therebetween. Other frame members (not shown) extend transversely of the machine and connect the opposite sides of the base frame 10 and the opposite sides of the rear frame 26. In Fig. 1, the forward end of the machine is to the left and the rearward end thereof is to the right.

The rear frame 26 is pivotally movable from the lower position shown in Fig. 1 to an upper position (not shown) by conventional means such as hydraulic cylinders (not shown) mounted at the sides of the machine and connected between the base frame 10 and the rear frame 26.

An arm assembly 38 is rotatably mounted on the base frame 10 for rotational movement between a forward position shown in phantom lines and a rearward position shown in full lines in Fig. 1. The arm assembly 38 includes arms 40 disposed inboard the sides of the machine. The arms 40 are rigidly connected to a cross tube 42 by bracket members 44. The cross tube 42 is rotatably mounted in suitable bearing members carried by the brackets 20 on the opposite sides of the base frame 10. The arm assembly 38 is normally urged toward its forward position preferably by conventional means such as extension or compression springs (not shown) connected between the arm assembly 38 and the base frame 10.

The arm assembly 38 carries rotatable guide members 46 and 48 on its arms 40. The base frame 10 supports rotatable guide members 52, 54 and cam guide members 56 inboard its opposite sides. Preferably, the cam guide members 56 are of the known type diclosed in U.S. Patent No. 3,901,007 and designated therein by the numeral '118'. Sprockets 58 are provided inboard the opposite sides of the base frame 10 and are fixed on a shaft that is rotatably mounted in suitable bearings on the base frame 10. The rear frame 26 supports rotatable guide members 60, 62, 64 and 66 inboard its opposite sides. The guide members 66 are carried on brackets 68 projecting from the frame members 30 of the rear frame 26.

A flexible bale forming apron 70 is movably supported on the aforementioned guide members and sprockets. As shown in Fig. 2, the apron 70 is preferably formed of a pair of endless link-type chains 72 connected at spaced intervals by transverse tubes or slats 74.

The apron chains 72 extend around and engage the various guide members and the sprockets 58. This apron 70 is of the known type disclosed in U.S. Patent No. 3,901,007 and designated by the numeral '82'.

A floor roller 76 extends transversely of the machine and is rotatably supported by brackets 78 on the opposite sides of the base frame 10. When the machine is empty, the upper surface of the floor roller 76 cooperates with a course of the apron 70 that extends upwardly and rearwardly from the guide members 66 over the cam guide members 56 and then downwardly and forwardly to the sprockets 58 to define an expandable bale chamber 80 having an initial wedge shape in side elevation. In this initial wedge shape, the forward end of the bale chamber is narrower than the rearward end thereof. A stripper roller 82, preferably rubber coated, extends transversely of the machine and is rotatably supported on the opposite sides of the base frame 10. The stripper roller 82 is positioned at the forward end of the bale chamber 80 in close proximity to the apron 70.

A pickup header 84 extends transversely of the machine and is supported by brackets 86 on the opposite sides of the base frame 10. The pickup header 84 is preferably of conventional type having a series of projecting fingers 88 for engaging and picking up windrowed crop material. A pair of wheels 90 mounted on the opposite sides of the base frame 10 support the machine. The wheels 90 are mounted on spindles which are connected to the frame member 24. Another pair of wheels 92 are mounted to the brackets 86 to provide support primarily for the pickup header 84. A tongue 94 is provided on the forward end of the base frame 10 for connection to a tractor.

The machine includes drive means (not shown) adapted for connection to the power take off unit (PTO) of a tractor. Referring to Fig. 1, rotary driving power will be delivered from the tractor PTO in a known manner to cause rotation of the sprockets 58, the floor roller 76, the stripper roller 82, and the pickup header fingers 88 in the same direction. Rotation of the sprockets 58 will drive the apron chains 72 thereby propelling the apron 70 around the various guide members in the base frame 10 and the rear frame 26 in the direction and along the path indicated. Preferably, the peripheral speed of the floor roller 76 should be equal to or slightly higher than the speed of the apron 70. This will tend to keep a roll of crop material toward the rearward end of the machine during formation.

As the machine is pulled across a field by a tractor, the pickup header fingers 88 engage, pickup and deliver windrowed crop material onto the upper surface of the rotating floor roller 76 in the bale chamber 80. The crop material is carried upwardly and then coiled back downwardly onto itself by the apron 70 which in its starting position moves upwardly and rearwardly from the guide members 66 over the cam guide members 56 and then downwardly and forwardly to the sprockets 58.

This movement of the apron 70 in the bale chamber effectively starts the core of the roll bale. The rotating stripper roller 82 removes crop material from the apron 70 at the forward end of the bale chamber 80 and delivers it back downwardly into the bale chamber 80. The roll bale increases in diameter lifting the inner course of the apron 70 that extends between the guide members 66, and the sprockets 58 off the cam guide members 56, and expanding the bale chamber 80 from its initial wedge shape to a substantially circular shape. The expansion of the bale chamber 80 results in expansion of the inner course of the apron 70 contacting the peripheral surface of the roll bale and movement of the apron 70 toward its final position shown in Fig. 1. This movement of the apron 70 is accomplished by rotation of the arm assembly 38 in a clockwise direction as viewed in Fig. 1, from its forward position. When the bale reaches its maximum diameter, the apron 70 will be in its final position of Fig. 1 and the arm assembly 38 will have rotated at its rearward position shown in Fig. 1. When it is desired to discharge a bale from the machine, the rear frame 26 is raised to its upper position. This stretches the inner course of the apron 70 across the space between the guide members 66 and the sprockets 58 thereby assisting the bale to exit the machine. The bale rotates in a clockwise direction as viewed in Fig. 1 as it exits the base frame 10.

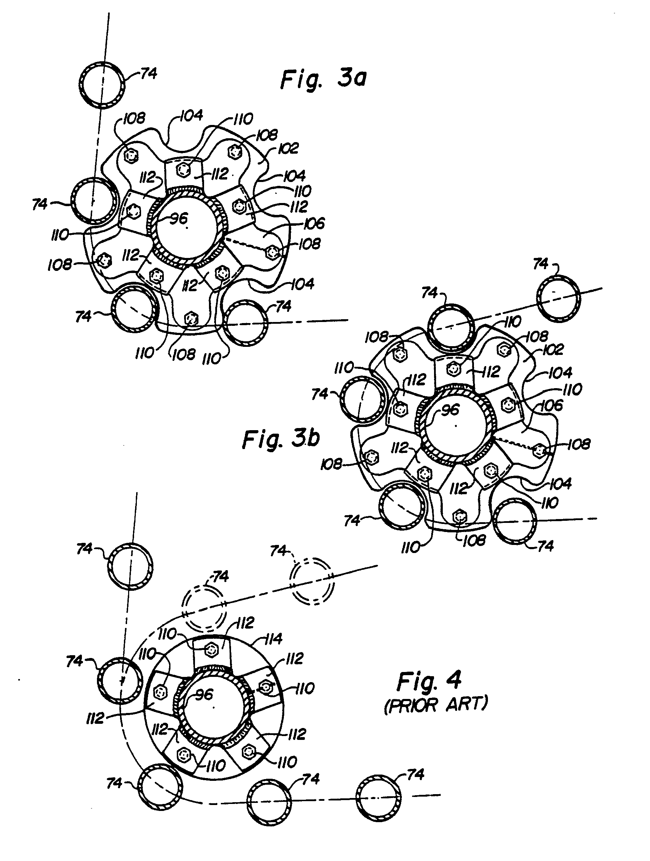

Referring now to Figures 2—4, it will be seen that the guide members 66 are mounted on a tube assembly 96 which extends transversely of the machine with the ends 98 thereof rotatably disposed in bearing members 100 carried in the brackets 68. A sprocket-shaped member 102, preferably formed of rubber, is mounted co-axially with the tube assembly 96 approximately midway between the brackets 68. As shown in Figs. 3a and 3b, the sprocket-shaped member 102 has notches 104 for receiving the apron tubes 74. The sprocket-shaped member 102 is secured between a pair of plates 106 by bolts 108. The sprocket-shaped member 102 and the plates 106 are then fastened by bolts 110 to tabs 112 which are welded to the tube assembly 96.

During bale formation, the apron 70 is most heavily loaded in the area where it is closest to the floor roller 76. This is the area where the apron tubes 74 successively come into contact with the bale as the apron 70 moves in the direction and along the path indicated in Fig. 1. In this area, the apron tubes 74 are moved in a generally upward direction around the tube assembly 96 when they successively engage from underneath the bale formed in the bale chamber 80. As the apron 70 continues to move in the given direction and thus causes the bale to rotate in the bale chamber 80, said apron tubes 74 exert a certain force on the surface of the bale and, to some extent, tend to lift the bale. The reaction of the bale on the apron tubes 74 comprises a component which is directed generally opposite to the direction of movement of said apron tubes 74 and a further component which is caused by the weight of the bale and which is directed vertically downwardly. The resultant force acting on the apron tubes 74 is directed generally downwardly and at an angle with respect to the radial direction relative to the sprocket-shaped supporting member 102. As the apron tubes 74 continue to move around the tube assembly 96, the orientation of these loads thereon changes and even may pass from one side of the radial direction as seen with respect to the supporting member 102 via said radial orientation to the opposite side thereof.

In this area, the apron tubes 74 are subjected to the greatest bending and twisting loads which are transferred to the apron chains 72. Without the present invention, these loads can result in damage to the apron 70 in the form of permanently bent apron tubes and broken apron chains.

A smooth idler or supporting member 114 shown in Figure 4 has been used prior to the sprocket-shaped supporting member 102 of the present invention. This smooth idler 114 will not prevent bending or twisting damage to the apron 70, however, since it does not adequately support the apron tubes 74 in the direction of the bending forces. It will be appreciated indeed that a smooth circular supporting member only can take up forces which are directed generally radially with respect to said supporting member. As explained herebefore, the bending loads acting on the apron tubes 74 may be oriented at an angle with respect to the radial direction.

The sprocket-shaped member 102 of the present invention supports the apron tubes 74 adequately enough in the area where the apron 70 is under the heaviest loads to prevent bending or twisting damage to the apron tubes 74 and the apron chains 72. Fig. 3a shows the relationship between the sprocket 102 and the apron tubes 74 when bale formation starts, and Fig. 3b shows the relationship between the sprocket 102 and the apron tubes 74 when a full bale has been formed.

More particularly, the 'legs' of the sprocket-shaped supporting member 102 are positioned relative to the apron tubes 74 as they pass around the tube assembly 96 so as to take up the bending loads which are oriented at an angle relative to the radial direction with respect to said supporting member 102. Depending on the length and the shape of these 'legs', the supporting member 102 is capable of taking up bending loads which may be angularly oriented between a radial inward direction and a tangential direction with respect to the sprocket-shaped supporting member. Taking into account the fact that the bending loads may change from one angular position relative to said radial direction to another angular position at the other side of said radial direction, the sprocket-shaped supporting member 102 may be dimensioned to take up any bending loads oriented in directions between opposed tangential direction with respect to the supporting member 102.

There is a clearance between the apron tubes 74 and the notches 104 of the sprocket-shaped member 102, as seen in Figs. 3a and 3b, which is sufficient to permit some flexing of the apron tubes 74 but which is not sufficient to permit any permanent deformation of the apron tubes 74.

The present invention is not limited to use on roll baling machines that have expandable bale chambers and, accordingly, may be used on roll baling machines having a fixed bale chamber. Also, while in the preferred embodiment of the invention, the sprocket-shaped supporting member 102 is provided generally vertically beneath the bale chamber 80, it may also be provided at other locations. In one such alternative arrangement, a sprocket-shaped supporting member may be provided co-axially with the drive members 58 generally at the upper portion of the bale chamber 80 when the machine is in the empty condition. Furthermore, the roll baling machine upon which the sprocket-shaped supporting member 102 is provided needs not necessarily to include a floor roller 76, as indeed, the sprocket-shaped supporting member may be used independently therefrom.

It will further be appreciated that, as the sprocket-shaped supporting member 102 intermeshes with the apron 70, said member 102 should be rotated in synchronism with the apron 70.

## Claims

1. A roll baling machine comprising an apron (70) movable to form roll bales of crop material and including transversely spaced apart endless flexible members (72) and a plurality of transverse members (74) extending at intervals between and interconnecting the endless flexible members (72), and a supporting member (102) rotatable in synchronism with the apron (70) for, during operation, providing support for the transverse members (74) intermediate the endless flexible members (72) in a generally radial direction of the supporting member, characterized in that, the supporting member (102) is sprocket-shaped with notches (104) for receiving, during operation, adjacent transverse members (74) providing thereby support for said transverse members (74) in a direction at an angle relative to said radial direction.

2. A roll baling machine according to claim 1, characterized in that the notches (104) and the transverse members (74) are proportionally dimensioned for the sprocket-shaped supporting member (102), during operation, to provide support for said transverse members (74) received in the notches (104) thereof in directions between a radially inward direction and a generally tangential direction with respect to said supporting member (102).

3. A roll baling machine according to claim 1, characterized in that the notches (104) and the transverse members (74) are proportionally dimensioned for the sprocket-shaped supporting member (102), during operation, to provide support for said transverse members (74) received in the notches (104) thereof in directions between opposed tangential directions with respect to said supporting member (102).

4. A roll baling machine according to any of the preceding claims, characterized in that the sprocket-shaped supporting member (102) is provided generally at the location where, during operation, the transverse members (74) successively enter into engagement with the bale being formed in the machine.

5. A roll baling machine according to claim 4, characterized in that the sprocket-shaped supporting member (102) is provided generally vertically beneath the bale forming chamber (80).

6. A roll baling machine according to any of the preceding claims further also comprising a floor roller (76) for, during operation, supporting at least a portion of the weight of the bale being formed in the machine and characterized in that the sprocket-shaped supporting member (102) is provided in the area where the apron (70) is closest to the floor roller (76).

7. A roll baling machine according to any of the claims 1 to 5 and further also comprising drive members (58) and guide members (66) on the machine for driving the apron (70) in a given direction, respectively for guiding the apron (70) along a predetermined path and characterized in that the sprocket-shaped member (102) is provided co-axially with the drive members (58) and/or the guide members (66).

8. A roll baling machine according to any of the preceding claims, characterized in that the sprocket-shaped supporting member (102) is formed at least partially of a rubber material.

9. A roll baling machine according to any of the preceding claims, characterized in that the sprocket-shaped supporting member (102) is fastened to a tube assembly (96) extending transversely of the machine.

10. A roll baling machine according to any of the preceding claims, characterized in that the notches (104) of the sprocket-shaped supporting member (102) receive the transverse members (74) with a clearance sufficient to permit some flexing of the transverse members (74).

## Patentansprüche

1. Rundballen-Formmaschine mit einem Förder- oder Umschlingungsband (70), das beweglich ist, um Rundballen aus Erntegut zu bilden, und das in Querrichtung mit Abstand angeordnete endlose flexible Elemente (72) und eine Vielzahl von Querteilen (74) einschließt, die sich unter Intervallen zwischen den endlosen flexiblen Elementen (72) erstrecken und diese miteinander verbinden, und mit einem Abstützteil (102), das synchron mit dem Förder- oder Umschlingungsband (70) drehbar ist, um im Betrieb eine Abstützung für die Querteile (74) zwischen den endlosen flexiblen Elementen (72) in einer allgemein radialen Richtung des Abstützteils zu bilden, dadurch gekennzeichnet, daß das Abstützteil (102) kettenradförmig ist und Nuten (104) aufweist, die im Betrieb benachbarte Querteile (74) aufnehmen und damit eine Abstützung für die Querteile (74) in einer Richtung unter einem Winkel relativ zur Radialrichtung bilden.

2. Rundballen-Formmaschine nach Anspruch 1, dadurch gekennzeichnet, daß die Nuten (104) und die Querteile (74) proportional so bemessen sind, daß das kettenradförmige Abstützteil (102) im Betrieb eine Abstützung für die in den Nuten (104) aufgenommenen Querteile in Richtung bildet, die zwischen einer radial nach innen gerichteten Richtung und einer allgemein tangentialen Richtung bezüglich des Abstützteils (102) liegen.

3. Rundballen-Formmaschine nach Anspruch 1, dadurch gekennzeichnet, daß die Nuten (104) und die Querteile (74) proportional so bemessen sind, daß das kettenradförmige Abstützteil (102) im Betrieb eine Abstützung für die in den Nuten (104) aufgenommenen Querteile (74) in Richtungen bildet, die zwischen entgegengesetzten Tangentialrichtungen bezüglich des Abstützteils (102) liegen.

4. Rundballen-Formmaschine nach einem der vorhergehenden Ansprüche, dadurch gekennzeichnet, daß das kettenradförmige Abstützteil (102) allgemein an der Stelle angeordnet ist, an der im Betrieb die Querteile (74) aufeinanderfolgend in Eingriff mit dem Rundballenkommen, der in der Maschine gebildet wird.

5. Rundballen-Formmaschine nach Anspruch 4, dadurch gekennzeichnet, daß das kettenradförmige Abstützteil (102) allgemein vertikal unterhalb der Rundballen-Formungskammer (80) vorgesehen ist.

6. Rundballen-Formmaschine nach einem der vorhergehenden Ansprüche, die weiterhin eine Bodenrolle (76) aufweist, die in Betrieb zumindestens einen Teil des Gewichtes des in der Maschine gebildeten Rundballens trägt, dadurch gekennzeichnet, daß das kettenradförmige Abstützteil (102) in dem Bereich vorgesehen ist, in dem das Förder- oder Umschlingungsband (70) am nächsten an der Bodenrolle (76) liegt.

7. Rundballen-Formmaschine nach Ansprüche 1 bis 5, bei der weiterhin Antriebsteile (58) und Führungsteile (66) auf der Maschine zum Antrieb des Förder- oder Umschlingungsbandes (70) ineiner vorgegebenen Richtung bzw. zur Führung des Förder- oder Umschlingungsbandes (70) entlang einer vorgegebenen Bahn vorgesehen sind, dadurch gekennzeichnet, daß ein kettenradförmiges Abstützteil (102) koaxial zu den Antriebsteilen (58) und/oder den Führungsteilen (66) vorgesehen ist.

8. Rundballen-Formmaschine nach einem der vorhergehenden Ansprüche, dadurch gekennzeichnet, daß das kettenradförmige Abstützteil (102) zumindestens teilweise aus einem Gummimaterial gebildet ist.

9. Rundballen-Formmaschine nach einem der vorhergehenden Ansprüche, dadurch gekennzeichnet, daß das kettkenradförmige Abstützteil (102) an einer Rohrbaugruppe (96) befestigt ist, die sich in Querrichtung der Maschine erstreckt.

10. Rundballen-Formmaschine nach einem der vorhergehenden Ansprüche, dadurch gekennzeichnet, daß die Nuten (104) des kettenradförmigen Abstützteil (102) die Querteile (74) mit einem Spiel aufnehmen, das ausreicht, um eine gewisse Biegung de Querteile (74) zu ermöglichen.

**Revendications**

1. Machine à rouler des balles comportant un tablier (70) mobile pour former des balles roulées de produits de récoltes et comprenant des éléments flexibles sans fin (72) espacés transversalement l'un de l'autre et plusieurs éléments transversaux (74) s'étendant à intervalles entre les éléments flexibles sans fin (72) et reliant ceux-ci entre eux, et un élémente support (102) mobile en rotation de manière synchronisée avec le tablier (70) pour servir, en fonctionnement, de support aux éléments transversaux (74) entre les éléments flexibles sans fin (72) dans une direction générale radiale de l'élément support, caractérisée en ce que l'élément support (102) a la forme d'une roue dentée pourvue de crans (104) destinés à loger, en fonctionnement, des éléments transversaux adjacents (74), pour servir ainsi de support auxdits éléments transversaux (74) dans une direction angulaire par rapport à ladite direction radiale.

2. Machine à rouler des balles selon la revendication 1, caractérisée en ce que les crans (104) et les éléments transversaux (74) sont de dimensions proportionnées pour que l'élément support en forme de roue dentée (102) puisse, en fonctionnement, servir de support auxdits éléments transversaux (74) logés dans les crans (104) de celui-ci dans des directions situées entre une direction orientée radialement vers l'intérieur et une direction générale tangentielle par rapport audit élément support (102).

3. Machine à rouler des balles selon la revendication 1, caractérisée en ce que les crans (104) et les éléments transversaux (74) sont de dimensions proportionnées pour que l'élément support en forme de roue dentée (102) puisse, en fonctionnement, servir de support auxdits éléments transversaux (74) logés dans les crans (104) de celui-ci dans des directions situées entre des directions tangentielles opposées par rapport audit élément support (102).

4. Machines à rouler des balles selon l'une quelconque des revendications précédentes, caractérisée en ce que l'élément support en forme roue dentée (102) est disposé dans son ensemble au point où, en fonctionnement, les éléments transversaux (74) entrent successivement en contact avec la balle en cours de formation dans la machine.

5. Machine à rouler des balles selon la revendication 4, caractérisée en ce que l'élément support en forme de roue dentée (102) est disposé dans une position générale verticale sous la chambre de formation de balles (80).

6. Machine à rouler des balles selon l'une quelconque des revendications précédentes comportant également un rouleau porteur (76) pour supporter, en fonctionnement, au moins une partie du poids de la balle en cours de formation dans la machine, et caractérisée en ce que l'élément support en forme de roue dentée (102) est disposé dans la zone où le tablier (70) est le plus proche du rouleau support (76).

7. Machine à rouler des balles selon l'une quelconque des revendications 1 à 5 comportant également des éléments d'entraînement (58) et des éléments de guidage (66) prévus sur la machine pour, respectivement, entraîner le tablier (70) dans une direction donnée et guider le tablier (70) le long d'un trajet prédéterminé, et caractérisée en ce qu'un élément support en forme de roue dentée (102) est disposé coaxialement aux éléments d'entraînement (58) et/ou aux éléments de guidage (66).

8. Machine à rouler des balles selon l'une quelconque des revendications précédentes, caractérisée en ce que l'élément support en forme de roue dentée (102) est formé, au moins partiellement, d'un matériau en caoutchouc.

9. Machine à rouler des balles selon l'une quelconque des revendications précédentes, caractérisée en ce que l'élément support en forme de roue dentée (102) est fixé à un ensemble tubulaire (96) qui s'étend transversalement à la machine.

10. Machine à rouler des balles selon l'une quelconque des revendications précédentes, caractérisée en ce que les crans (104) de l'élément support en forme de roue dentée (102) logent les éléments transversaux (74) avec un jeu suffisant pour permettre une certaine flexion des éléments transversaux (74).

0 103 920

Fig. 1

Fig. 2

1

Fig. 3a

Fig. 3b

Fig. 4
(PRIOR ART)

2